# EUROPEAN PATENT SPECIFICATION

(11) **EP 4 169 794 B1**
(45) Date of publication and mention of the grant of the patent: **17.07.2024**
(21) Application number: 21203349.2
(22) Date of filing: 19.10.2021
(51) Int. Cl.: B60W 40/09, B60W 50/14, B60W 40/06

(54) **A METHOD FOR RATING AND FOR IMPROVING A DRIVER'S DRIVING STYLE BASED ON A SAFETY LEVEL CRITERIA, CORRESPONDING COMPUTER PROGRAM AND ELECTRONIC CONTROL UNIT**
VERFAHREN ZUR BEWERTUNG UND VERBESSERUNG DES FAHRSTILS EINES FAHRERS BASIEREND AUF EINEM SICHERHEITSNIVEAUKRITERIUM, ENTSPRECHENDES COMPUTERPROGRAMM UND ELEKTRONISCHE STEUEREINHEIT
PROCÉDÉ D'ÉVALUATION ET D'AMÉLIORATION DU STYLE DE CONDUITE D'UN CONDUCTEUR SUR LA BASE D'UN CRITÈRE DE NIVEAU DE SÉCURITÉ, PROGRAMME INFORMATIQUE ET UNITE DE COMMANDE ÉLECTRONIQUE CORRESPONDANTS

(43) Date of publication of application: 26.04.2023
(73) Proprietor: VOLVO TRUCK CORPORATION, 405 08 Göteborg (SE)
(72) Inventor: SUBRAMANIAN, Chidambaram, 27407 NC, Greensboro (US)
(74) Representative: Germain Maureau

(56) References cited:
- WO-A1-2019/165838
- US-A1- 2007 213 886
- US-A1- 2010 023 223
- US-A1- 2011 193 693

## Description

### TECHNICAL FIELD OF THE INVENTION

This invention relates to the field of rating and improving a driver's driving style safety level.

### BACKGROUND

US 2010/0023223 A1 shows driving style estimation, US 2011/0193693 A1 discloses driver recommendations. In addition, it is known to monitor drive time and to provide feedback about rest required for the driver.

Therefore, there is a need for a solution to rate and improve a driver's driving style safety level.

### SUMMARY OF THE INVENTION

To that end, the present invention provides a method for estimating and for improving, based on a safety level criteria, a driver's driving style in a vehicle, the vehicle comprising an electronic control unit, sensors and a communication bus configured to convey data measured by the sensors to the electronic control unit, the electronic control unit being configured to run a vehicle simulation module, a neural network module, a feedback module, and a physics-based processing module, the method comprising the following steps implemented by the electronic control unit:
- collect measured sensor data measured by the sensors during a period of time, the measured sensor data comprising environment data, driver signals and vehicle state signals;
- process by the physics-based processing module the measured sensor data, in frequency domain, to produce, based on a physics based model, processed sensor data, the processed sensor data comprising a physics-based route classification and a physics-based driver's driving style classification;

- feed measured sensor data as input to the neural network module trained for predicting a neural network output, the neural network output comprising a machine learning route classification and a machine learning driver's driving style classification;
- provide the physics-based route classification and the physics-based driver's driving style classification, and the machine learning route classification and the machine learning driver's driving style classification, as input to the feedback module configured to estimate a driving recommendation for the driver,
- input the driving recommendation to an emulation module, the emulation module being configured to provide emulated driver signals based on the driving recommendation,
- input the emulated driver signals and the environment data to the vehicle simulation module, the vehicle simulation module being configured to simulate the vehicle, based on the emulated driver signals and on the environment data, to provide simulated vehicle state signals,
- process, by the physics-based processing module, the emulated driver signals and the simulated vehicle state signals and the environment data, in frequency domain, to produce processed simulated sensor data, the processed simulated sensor data comprising a simulated physics-based route classification and a simulated physics-based driver's driving style classification;
- process, by the neural network module, the emulated driver signals and the simulated vehicle state signals and the environment data to predict a simulated neural network output, the simulated neural network output comprising a simulated machine learning route classification and a simulated machine learning driver's driving style classification;
- provide to the feedback module the simulated physics-based route classification and the simulated physics-based driver's driving style classification and the simulated machine learning route classification and the simulated machine learning driver's driving style classification, the feedback module being further configured to check whether the driving recommendation has improved the safety level,
- depending on the result of the checking by the feedback module, provide the driving recommendation to the driver to improve the driver's driving style safety level.

According to an embodiment, the invention comprises one or more of the following features, alone or in any combination technically compatible.

According to an embodiment, the route classification is one of hilly road, hilly highway, lane highway, interstate highway, flat terrain, unpaved road, poor road surface, flat road surface, mining quarry, port of harbour, rural road, city road, offroad.

According to an embodiment, the driver signals comprise at least one signal resulting from an action of the driver.

According to an embodiment, the driver signals comprise at least one of a brake pedal position signal, a throttle pedal position signal, a steering angle signal.

According to an embodiment, the vehicle state signals comprise at least one of a wheel speed signal, a vehicle accelerometer signal, a yaw rate signal, and a roll rate signal.

According to an embodiment, the environment data comprise at least one of a vehicle position signal, a road inclination signal, a road surface index.

According to an embodiment, the vehicle position signal is a GPS type position signal.

According to these provisions, the more sensors are used, the more accurate will the predictions be.

According to an embodiment, the processing steps by the physics-based processing module comprise using Fast Fourier Transformation, preferably according to PWelch method, of the measured sensor data collected, or of the emulated driver signals and the simulated vehicle state signals and the environment data.

According to these provisions, the step of processing, by the physics-based processing module, of the measured sensor data collected during the period of time, or of the emulated driver signals and the simulated vehicle state signals and the environment data, results in transformed data into the frequency domain, the transformed data being indicative of how frequently changes occur in the measured sensor data, or in the emulated driver signals and in the simulated vehicle state signals and in the environment data; for example in the lateral acceleration or velocity of the vehicle; how frequently changes are occurring is correlated with some driving style classification categories such as rash, smooth, conservative, dangerous.

According to an embodiment, the neural network module is a recurrent neural network.

According to these provisions, the neural network is trained to predict a neural network output, when it is provided as input the measured sensor data collected, the predicted neural network output comprising a driving style classification among categories such as rash, smooth, conservative, dangerous.

According to an embodiment, the driving style classification is one of rash, smooth, conservative, dangerous.

According to another aspect, the invention provides a computer program comprising a set of instructions executable on a computer or a processing unit, the set of instructions being configured to implement the method according to anyone of the embodiments described herein above, when the instructions are executed by the computer or the processing unit.

According to a further aspect, the invention provides an electronic control unit configured to communicate with a communication bus of a vehicle so as to collect data time series measured during a period of time by sensors installed on the vehicle, the electronic control unit being configured to run a vehicle simulation module, a neural network module, preferably a recurrent neural network, a feedback module, and a physics-based processing module, the electronic control unit further comprising a processing unit and a memory unit, the memory unit comprising a computer program according to the embodiment set forth herein above.

According to a further aspect, the invention provides a vehicle comprising an electronic control unit according to the embodiment set forth herein above.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:

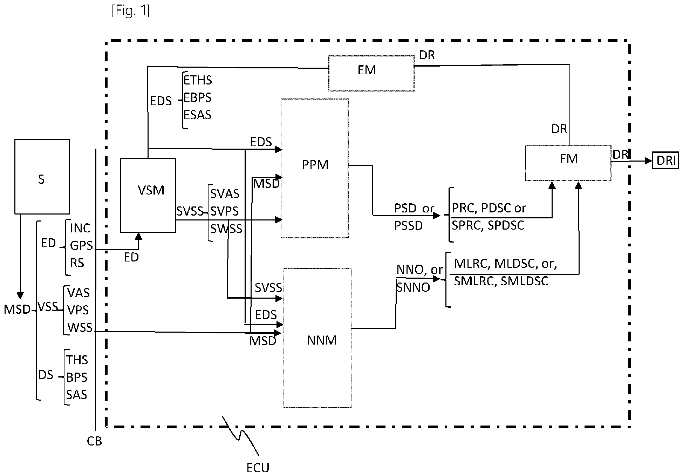

[Fig. 1] represents schematically the main vehicle's components and data involved in the implementation of the method according to an embodiment of the invention.

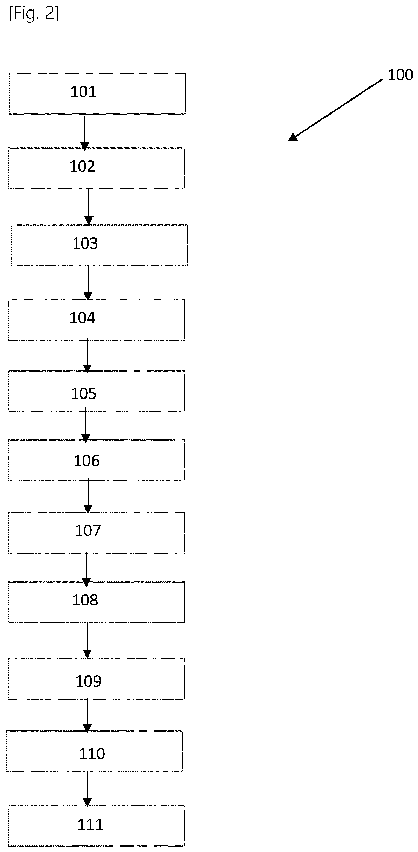

[Fig. 2] represents the sequence diagram of the steps of the method according to an embodiment of the invention.

### DETAILED DESCRIPTION OF THE INVENTION ACCORDING TO AN EMBODIMENT

The method 100 according to the invention is intended to estimate a driver's driving style safety level, and to provide accordingly driving recommendations DR to the driver DRI to improve the driver's driving style safety level.

The vehicle comprises an electronic control unit ECU, sensors S and a communication bus CB configured to convey data measured by the sensors S to the electronic control unit ECU, the electronic control unit being configured to run (1) a machine learning processing module, such as a neural network module NNM, (2) a physics-based processing module PPM, (3) a feedback module FM, and (4) a vehicle simulation module VSM.

The sensors S are provided to collect, at step 101 of the method 100, measured sensor data MSD, measured during a certain period of time; the measured sensor data MSD comprise (1) driver signals DS concerning driver actions, (2) vehicle state signals VSS, and (3) road environment data ED. The sensors are further configured to communicate these measured sensor data MSD to the electronic control unit ECU via a communication bus, for example via a standard CAN bus.

Driver signals DS, which are the result of the driver's action on the vehicle, comprise signals such as a brake pedal position signal BPS, a throttle pedal position signal THS, a steering angle signal SAS, switches in the dash, etc....

Vehicle state signals VSS, may include a wheel speed signal WSS, a vehicle accelerometer signal VAS, a yaw rate signal, and a roll rate signal, etc....

Road environment data ED, comprise signals related to the road environment such as a vehicle position signal VPS, a road inclination INC, a road surface RS index etc...

The vehicle position signal may for example be a GPS position.

The more sensors are involved, the more accurate the method 100 will be.

Measured sensor data MSD collected at step 101, is then provided, at a next step 102, to the physics-based processing module PPM, and, at step 103, to the neural network module NNM.

The physics-based processing module PPM is configured to process, at step 102, the measured sensor data MSD based on a physics based model, and to produce two types of output : a physics-based route classification PRC, i.e. a route classification based on the physics based model used to process the measured sensor data MSD, and a physics-based driver's driving style classification PDSC, i.e. a driver's driving style classification based on the physics based model used to process the measured sensor data MSD.

The physics-based processing of the signals provided with the measured sensor data MSD may typically comprise using Fast Fourier Transform (FFT), preferably according to PWelch method, of the measured sensor data MSD, measured during said period of time. Using Fast Fourier Transform for the processing of input signals will provide output signals in the frequency domain, typically a power with respect to a frequency, the power being indicative of the amplitude of variations of the input signal at said frequency.

The neural network module NNM, on the other hand, is configured, by training, to predict a neural network output NNO comprising a machine learning route classification MLRC and a machine learning driver's driving style classification MLDSC.

For example, considering a driver DRI driving rash in two lane curvy hilly roads. He drastically accelerates to overtake a vehicle in the front and drastically brakes to get back to the speed limit because there is another car in front of him. Further, the driver also sways around traffic by constantly changing lanes. This would typically correspond to a dangerous the driving style.

According to the invention, among all the CAN BUS signals, example measured sensor data MSD signals are provided such as: among driver signals DS, such as throttle, brake, steering, among vehicle state signals VSS, such as vehicle speed, and among environment data signals ED, such as a road inclination, a road surface index.

When these signals pass through the FFT signal processing, the power provided by the FFT output from throttle, brake and vehicle speed exceeds a limit - stating that the driver is accelerating and braking very frequently in a rash manner. Similarly, in steering input, the FFT output power would be more than a limit value proving that the driver is constantly changing lanes. This limit value will be decided on multiple parameters, example - limit value will be decreased for hilly regions since it's more dangerous there to drive rash. Depending on the road surface like pot holes or GPS data, if it's a mountain or a highway, the limit value will change.

Anything above the limit will say that the driver has high frequent unsafe maneuvers.

Thus, taking into account the power spectrum of the signals output by the physics-based processing module PPM, said physics-based processing module is further configured to provide a physics-based route classification PRC, and a physics-based driver's driving style classification PDSC.

The physics-based driver's driving style classification may for example determine that the driver's driving style belongs to one of the following categories:
- Unsafe lane changes
- Frequent Lane changes
- Safe steering
- Harsh late braking
- Safe braking
- Rapid throttle control
- Smooth throttle control
- Good vehicle speed limit maintenance
- Poor speed limit maintenance
- Etc.

And the physics-based route classification may for example determine that the route belongs to one of the following categories:
- Hilly roads
- 5 lanes highways
- Interstate highways
- City roads
- Flat terrains
- Unpaved road
- Poor road surface
- Etc.

The same measured sensor data MSD signals inputs go, at step 103, into the neural network module NNM, which has been trained, taking enormous data from rash driving to smooth driving, to classify these inputs into the same few categories as shown above for the machine learning driver's driving style classification MLDSC, i.e. :
- Unsafe lane changes
- Frequent Lane changes
- Safe steering
- Harsh late braking
- Safe braking
- Rapid throttle control
- Smooth throttle control
- Good vehicle speed limit maintenance
- Poor speed limit maintenance
- Etc.

Likewise, the neural network module NNM, has been trained, taking enormous data from different types of route, to classify these inputs into the same few categories as shown above for the machine learning route classification MLRC, i.e.:
- Hilly roads
- 5 lanes highways
- Interstate highways
- City roads
- Flat terrains
- Unpaved road
- Poor road surface
- Etc.

The training of the neural network module NNM uses recording data and truth labelling this data.

The neural network module is preferably a recurrent neural network, configured to be provided time series of data as input.

Thus, the output of the neural network module NNM, at step 103 of the method according to the invention, is the neural network output NNO comprising the machine learning route classification MLRC and the machine learning driver's driving style classification MLDSC; the output of the signal physics-based processing module PPM, at step 102 of the method, is the processed sensor data PSD comprising a physics-based route classification PRC and a physics-based driver's driving style classification PDSC.

Step 102 and step 103 of the method are advantageously performed in parallel and simultaneously.

At next step 104 of the method, the physics-based route classification PRC and the physics-based driver's driving style classification PDSC, and the machine learning route classification MLRC and the machine learning driver's driving style classification MLDSC, as input to the feedback module FM.

The feedback module is configured to estimate a driving recommendation DR for the driver based on a combination of the physics-based route classification PRC and the physics-based driver's driving style classification PDSC, and the machine learning route classification MLRC and the machine learning driver's driving style classification MLDSC, provided to the feedback module FM. The driving recommendation DR may be for example : the driver should brake sooner and change lanes less frequently.

For example, the feedback module uses a look up table and confirm for this route classified and for this driving style the safe maneuver is to brake sooner, turn smoothly and change lanes less frequently.

An example of such a look-up table is provided here :

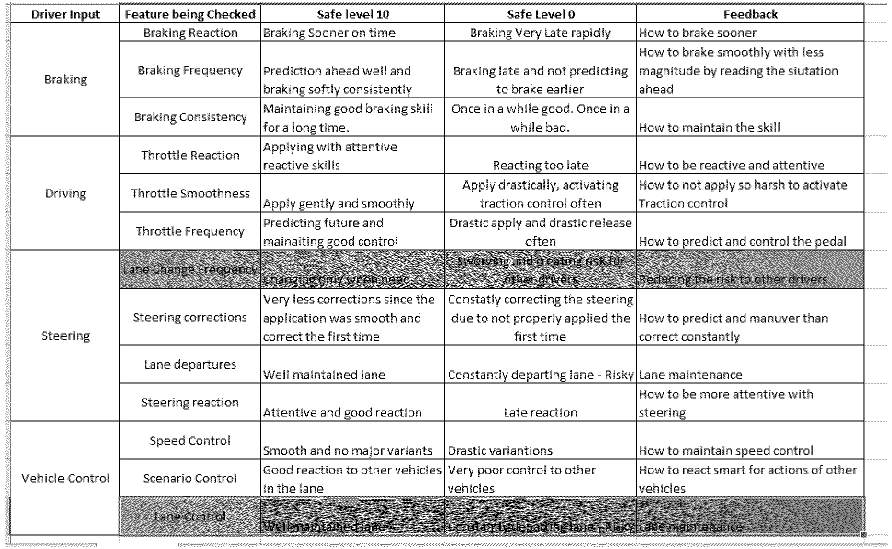

As indicated above, inputs for the feedback module FM are the route and driving style predicted by both data driven approach, i.e. by the neural network module NNM and by physics-based approach, i.e. by the physics-based processing module PPM. Now, the simple look up table, based on these inputs, provides a predetermined feedback to improve the driving safety.

In the specific example illustrated here in the look up table by the highlighted lines of the lookup tables, it will provide a feedback to the driver to not change lanes or overtake often in hilly regions. Which means, trying to maintain the point A to point B route in GPS for one or more periods of time but with minimal steering variations.

At the next steps 105 and 106 of the method, this driving recommendation DR is sent to the vehicle simulation module VSM for verification to check if the provided feedback is good or not.

The vehicle simulation module VSM is configured to receive as input emulated driver signals EDS and the environment data ED; the emulation of the driver signals is performed first, at step 105 of the method, by an emulation module EM, based on the driving recommendation DR. The actions recommended by the driving recommendation DR will need driver signals DS to be emulated like the steering, throttle and brakes. The emulated driver signals EDS, as recommended by the driving recommendation DR from the feedback module FM, is generated as input for the vehicle simulation module VSM. The emulated driver signals EDS will typically comprise signals such as steering, throttle, brakes, etc... emulated according to the driving recommendation.

The vehicle simulation module VSM is configured to simulate at step 106 of the method, the vehicle so as to output simulated state vehicle signals SVSS, like yaw rate, lateral acceleration etc... , similar to the vehicle state CAN signals that are observed from the vehicle in the real world; simulated state vehicle signals SVSS are generated by the vehicle simulation module VSM based on the emulated driver signals EDS, like steering, throttle, brakes, and switches, and on the environmental data ED signals like road inclination etc. In other words, the vehicle simulation module VSM will use the environment conditions - road surface, inclination, vehicle position, etc. and simulate the vehicle state signals SVSS based on the emulated driver signals EDS like steering, brake and throttle according to the recommended actions of the driving recommendation DR.

At next step 107 of the method, the emulated driver signals EDS and the simulated vehicle state signals SVSS, and the environment data ED signal is input to the physics-based processing module PPM and to the neural network module NNM.

At next step 108, the emulated driver signals EDS and the simulated vehicle state signals SVSS and the environment data ED signal is processed by the physics-based processing module PPM, in a similar way as the measured sensor data MSD was previously processed at step 102 of the method by the physics-based processing module PPM, to produce similarly processed simulated sensor data PSSD, the processed simulated sensor data PSSD comprising a simulated physics-based route classification SPRC and a simulated physics-based driver's driving style classification SPDSC.

At next step 109, the emulated driver signals EDS and the simulated vehicle state signals SVSS and the environment data ED signal is processed by the neural network module NNM, in a similar way as the measured sensor data MSD was previously processed at step 102 of the method by the neural network module NNM, to produce similarly simulated neural network output SNNO, the simulated neural network output SNNO comprising a simulated machine learning route classification SMLRC and a simulated machine learning driver's driving style classification SMLDSC.

At next step 110, the feedback module FM is provided the simulated physics-based route classification SPRC and the simulated physics-based driver's driving style classification SPDSC and the simulated machine learning route classification SMLRC and the simulated machine learning driver's driving style classification SMLDSC, the feedback module FM being further configured to check whether the driving recommendation DR has improved the safety level.

Depending on the result of the checking by the feedback module FM, provide the driving recommendation DR is provided, at step 111 of the method, to the driver DRI to improve the driver's driving style safety level.

According to these provisions, the driving recommendation DR estimated at step 104 of the method is provided to the driver DRI only if the step of checking has demonstrated that the driver's driving style safety level is improved by the applying said driving recommendation DR.

The method 100 will be further described, herein below, according to another example, considering a highly manoeuvring driver with constant speed changes in urban areas.

In this specific example, the driver signals DS recorded show up that the driver has constantly changed lanes and show drastic speed changes; the vehicle state signals VSS show flat roads from the GPS and varying speed limits of the vehicle showing that it is on urban roads.

In this specific example, the neural network module NNM provides an output of urban region and driver frequently manoeuvring. Similarly, the FFT computed by the physics-based processing module PPM, shows higher values in the frequency of the steering signal than usual and the same is observed in the vehicle speed signal.

This is reflected in the highlighted lines of the lookup table below :

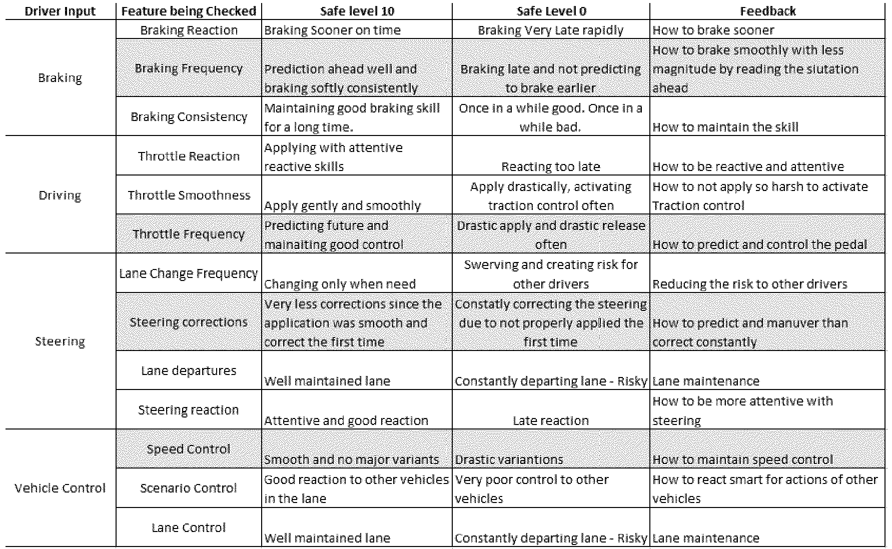

In this specific example, the feedback module FM estimates a driving recommendation DR to maintain speed decently or reduce steering corrections. Which means, trying to maintain the point A to point B route in GPS for one or more periods of time but with minimal steering variations and speed variants. This driving recommendation DR is sent to the vehicle simulation module for verification to check if the estimated driving recommendation is good or not.

In this specific example, the urban region signals, and other environmental signals are recreated. The emulated driver signals EDS recommended by the feedback module is generated as input for the vehicle in the vehicle simulation module VSM. In this case, the steering to be less corrected and throttle/brake to be less frequent.

The simulation is run based on the environmental data ED signals like road inclination, road surface etc. and based on the emulated driver signals EDS like steering, throttle, brakes, and switches in the dash. The vehicle simulation module VSM generates simulated vehicle state signals SVSS similar in nature to vehicle state signals VSS observed from the vehicle in the real world. The simulated vehicle state signals SVSS show that the vehicle cannot reach point B from point A and all necessary simulated CAN signals, i.e. simulated vehicle state signals SVSS and emulated driver signals EDS, like yaw rate, lateral acceleration etc. are recorded and sent to the physics-based processing module PPM and to the neural network module NNM. Also, the yaw rate values being higher due to trying to maintain smoother vehicle speed could have been dangerous in turning in sharp curves in urban areas.

These simulated CAN signals, i.e. simulated vehicle state signals SVSS and emulated driver signals EDS, sent to the physics-based processing module PPM and to the neural network module NNM the output of which is sent to the feedback module FM configured to evaluate the driving that is performed in the simulation world based on the recommended driver signals. In this specific example, the recreated environment signals are indicative of a urban road with reduced driver speed control input frequency. This is predicted for the simulated signals and sent to the feedback module FM.

The feedback module FM based on the classification input provided by the neural network module NNM and by the physics-based processing module PPM based on the simulated vehicle state signals SVSS and on emulated drivers signals EDS, determines a less safe driving style compared to the previous classification input provided by the neural network module NNM and by the physics-based processing module PPM based on the real-world vehicle state signals VSS and on real world drivers signals DS. Since the feedback modules does not determine a better safety level than the actual real world signals, this driver recommendation is not provided to the driver DRI.

According to an aspect, the invention relates to a computer program comprising a set of instructions executable on a computer or a processing unit, the set of instructions being configured to implement the method 100 according to anyone of the embodiments described herein above, when the instructions are executed by the computer or the processing unit.

According to a further aspect, the invention relates to an electronic control unit ECU configured to communicate with a communication bus of a vehicle so as to collect data time series measured during a period of time by sensors S installed on the vehicle, the electronic control unit ECU being configured to run a vehicle simulation module VSM, a neural network module NNM, preferably a recurrent neural network RNN, a feedback module FM, and a physics-based processing module PPM, the electronic control unit ECU further comprising processing unit and a memory unit, the memory unit comprising a computer program as described herein above.

According to a further aspect, the invention relates to a vehicle comprising an electronic control unit ECU according as described herein above.

## Claims

1. Method (100) for estimating and for improving, based on a safety level criteria, a driver's (DRI) driving style in a vehicle, the vehicle comprising an electronic control unit (ECU), sensors (S) and a communication bus (CB) configured to convey data measured by the sensors (S) to the electronic control unit (ECU), the electronic control unit being configured to run a vehicle simulation module (VSM), a neural network module (NNM), a feedback module (FM), and a physics-based processing module (PPM), the method (100) comprising the following steps implemented by the electronic control unit (ECU):
- collect (101) measured sensor data (MSD) measured by the sensors (S) during a period of time, the measured sensor data (MSD) comprising environment data (ED), driver signals (DS) and vehicle state signals (VSS);
- process (102) by the physics-based processing module (PPM) the measured sensor data (MSD), in frequency domain, to produce, based on a physics based model, processed sensor data (PSD), the processed sensor data (PSD) comprising a physics-based route classification (PRC) and a physics-based driver's driving style classification (PDSC);
- feed (103) measured sensor data (MSD) as input to the neural network module (NNM) trained for predicting a neural network output (NNO), the neural network output (NNO) comprising a machine learning route classification (MLRC) and a machine learning driver's driving style classification (MLDSC);
- provide (104) the physics-based route classification (PRC) and the physics-based driver's driving style classification (PDSC), and the machine learning route classification (MLRC) and the machine learning driver's driving style classification (MLDSC), as input to the feedback module (FM) configured to estimate a driving recommendation (DR) for the driver,
- input (105) the driving recommendation (DR) to an emulation module (EM), the emulation module (EM) being configured to provide emulated driver signals (EDS) based on the driving recommendation (DR),
- input (106) the emulated driver signals (EDS) and the environment data (ED) to the vehicle simulation module (VSM), the vehicle simulation module (VSM) being configured to simulate the vehicle, based on the emulated driver signals (EDS) and on the environment data (ED), to provide simulated vehicle state signals (SVSS),
- process (108), by the physics-based processing module (PPM), the emulated driver signals (EDS) and the simulated vehicle state signals (SVSS) and the environment data (ED), in frequency domain, to produce processed simulated sensor data (PSSD), the processed simulated sensor data (PSSD) comprising a simulated physics-based route classification (SPRC) and a simulated physics-based driver's driving style classification (SPDSC);
- process (109), by the neural network module (NNM), the emulated driver signals (EDS) and the simulated vehicle state signals (SVSS) and the environment data (ED) to predict a simulated neural network output (SNNO), the simulated neural network output (SNNO) comprising a simulated machine learning route classification (SMLRC) and a simulated machine learning driver's driving style classification (SMLDSC);
- provide (110) to the feedback module (FM) the simulated physics-based route classification (SPRC) and the simulated physics-based driver's driving style classification (SPDSC) and the simulated machine learning route classification (SMLRC) and the simulated machine learning driver's driving style classification (SMLDSC), the feedback module (FM) being further configured to check whether the driving recommendation (DR) has improved the safety level,
- depending on the result of the checking by the feedback module (FM), provide (111) the driving recommendation to the driver (DRI) to improve the driver's driving style safety level.

2. Method according to claim 1, wherein the driver signals (DS) comprise at least one signal resulting from an action of the driver.

3. Method according to claim 2, wherein the driver signals (DS) comprise at least one of a brake pedal position signal (BPS), a throttle pedal position signal (THS), a steering angle signal (SAS).

4. Method according to claim 1, wherein the vehicle state signals (VSS) comprise at least one of a wheel speed signal (WSS), a vehicle accelerometer signal (VAS), a yaw rate signal, and a roll rate signal.

5. Method according to claim 1, wherein the environment data (ED) comprise at least one of a vehicle position signal (VPS), a road inclination signal (INC), a road surface (RS) index.

6. Method according to anyone of previous claims, wherein the processing steps by the physics-based processing module (PPM) comprise using Fast Fourier Transformation, preferably according to PWelch method, of the measured sensor data (MSD) collected, or of the emulated driver signals (EDS) and the simulated vehicle state signals (SVSS) and the environment data (ED).

7. Method according to anyone of previous claims, wherein the neural network module is a recurrent neural network.

8. Method according to anyone of previous claims, wherein the driving style classification is one of rash, smooth, conservative, dangerous.

9. Computer program comprising a set of instructions executable on a computer or a processing unit, the set of instructions being configured to implement the method (100) according to anyone of claims 1 to 8, when the instructions are executed by the computer or the processing unit.

10. Electronic control unit (ECU) configured to communicate with a communication bus of a vehicle so as to collect data time series measured during a period of time by sensors (S) installed on the vehicle, the electronic control unit (ECU) being configured to run a vehicle simulation module (VSM), a neural network module (NNM), preferably a recurrent neural network (RNN), a feedback module (FM), and a physics-based processing module (PPM), the electronic control unit (ECU) further comprising processing unit and a memory unit, the memory unit comprising a computer program according to claim 9.

11. Vehicle comprising an electronic control unit (ECU) according to claim 10.

## Patentansprüche

1. Verfahren (100) zum Schätzen und Verbessern des Fahrstils eines Fahrers (DRI) in einem Fahrzeug basierend auf einem Sicherheitsniveaukriterium, wobei das Fahrzeug eine elektronische Steuereinheit (ECU), Sensoren (S) und einen Kommunikationsbus (CB), der dazu konfiguriert ist, von den Sensoren (S) gemessene Daten an die elektronische Steuereinheit (ECU) zu übermitteln, umfasst, wobei die elektronische Steuereinheit dazu konfiguriert ist, ein Fahrzeugsimulationsmodul (VSM), ein neuronales Netzwerkmodul (NNM), ein Feedback-Modul (FM) und ein physikbasiertes Verarbeitungsmodul (PPM) auszuführen, wobei das Verfahren (100) die folgenden Schritte umfasst, die von der elektronischen Steuereinheit (ECU) implementiert werden:
- Erfassen (101) gemessener Sensordaten (MSD), die von den Sensoren (S) während eines Zeitraums gemessen werden, wobei die gemessenen Sensordaten (MSD) Umgebungsdaten (ED), Fahrersignale (DS) und Fahrzeugzustandssignale (VSS) umfassen;
- Verarbeiten (102) der gemessenen Sensordaten (MSD) durch das physikbasierte Verarbeitungsmodul (PPM) im Frequenzbereich, um basierend auf einem physikbasierten Modell verarbeitete Sensordaten (PSD) zu erzeugen, wobei die verarbeiteten Sensordaten (PSD) eine physikbasierte Routenklassifizierung (PRC) und eine physikbasierte Klassifizierung des Fahrstils des Fahrers (PDSC) umfassen;
- Einspeisen (103) gemessener Sensordaten (MSD) als Eingabe in das neuronale Netzwerkmodul (NNM), das für die Vorhersage einer neuronalen Netzwerkausgabe (NNO) trainiert ist, wobei die neuronale Netzwerkausgabe (NNO) eine Routenklassifizierung durch maschinelles Lernen (MLRC) und eine Klassifizierung des Fahrstils des Fahrers durch maschinelles Lernen (MLDSC) umfasst;
- Bereitstellen (104) der physikbasierten Routenklassifizierung (PRC) und der physikbasierten Klassifizierung des Fahrstils des Fahrers (PDSC) sowie der Routenklassifizierung durch maschinelles Lernen (MLRC) und der Klassifizierung des Fahrstils des Fahrers durch maschinelles Lernen (MLDSC) als Eingabe an das Feedback-Modul (FM), das dazu konfiguriert ist, eine Fahrempfehlung (DR) für den Fahrer zu schätzen,
- Eingeben (105) der Fahrempfehlung (DR) in ein Emulationsmodul (EM), wobei das Emulationsmodul (EM) dazu konfiguriert ist, emulierte Fahrersignale (EDS) basierend auf der Fahrempfehlung (DR) bereitzustellen,
- Eingeben (106) der emulierten Fahrersignale (EDS) und der Umgebungsdaten (ED) in das Fahrzeugsimulationsmodul (VSM), wobei das Fahrzeugsimulationsmodul (VSM) dazu konfiguriert ist, das Fahrzeug basierend auf den emulierten Fahrersignalen (EDS) und auf den Umgebungsdaten (ED) zu simulieren, um simulierte Fahrzeugzustandssignale (SVSS) bereitzustellen,
- Verarbeiten (108), durch das physikbasierte Verarbeitungsmodul (PPM), der emulierten Fahrersignale (EDS) und der simulierten Fahrzeugzustandssignale (SVSS) und der Umgebungsdaten (ED) im Frequenzbereich, um verarbeitete simulierte Sensordaten (PSSD) zu erzeugen, wobei die verarbeiteten simulierten Sensordaten (PSSD) eine simulierte physikbasierte Routenklassifizierung (SPRC) und eine simulierte physikbasierte Klassifizierung des Fahrstils des Fahrers (SPDSC) umfassen;
- Verarbeiten (109), durch das neuronale Netzwerkmodul (NNM), der emulierten Fahrersignale (EDS) und der simulierten Fahrzeugzustandssignale (SVSS) und der Umgebungsdaten (ED), um eine simulierte neuronale Netzwerkausgabe (SNNO) vorherzusagen, wobei die simulierte neuronale Netzwerkausgabe (SNNO) eine simulierte Routenklassifizierung durch maschinelles Lernen (SMLRC) und eine simulierte Klassifizierung des Fahrstils des Fahrers durch maschinelles Lernen (SMLDSC) umfasst;
- Bereitstellen (110) der simulierten physikbasierten Routenklassifizierung (SPRC) und der simulierten physikbasierten Klassifizierung des Fahrstils des Fahrers (SPDSC) sowie der simulierten Routenklassifizierung durch maschinelles Lernen (SMLRC) und der simulierten Klassifizierung des Fahrstils des Fahrers durch maschinelles Lernen (SMLDSC) an das Feedback-Modul (FM), wobei das Feedback-Modul (FM) ferner dazu konfiguriert ist, zu überprüfen, ob die Fahrempfehlung (DR) das Sicherheitsniveau verbessert hat,
- in Abhängigkeit vom Ergebnis des Überprüfens durch das Feedback-Modul (FM), Bereitstellen (111) der Fahrempfehlung an den Fahrer (DRI), um das Sicherheitsniveau des Fahrstils des Fahrers zu verbessern.

2. Verfahren nach Anspruch 1, wobei die Fahrersignale (DS) mindestens ein Signal umfassen, das aus einer Aktion des Fahrers resultiert.

3. Verfahren nach Anspruch 2, wobei die Fahrersignale (DS) mindestens eines von einem Bremspedalpositionssignal (BPS), einem Gaspedalpositionssignal (THS) und einem Lenkwinkelsignal (SAS) umfassen.

4. Verfahren nach Anspruch 1, wobei die Fahrzeugzustandssignale (VSS) mindestens eines von einem Raddrehzahlsignal (WSS), einem Fahrzeugbeschleunigungsmessersignal (VAS), einem Gierratensignal und einem Rollratensignal umfassen.

5. Verfahren nach Anspruch 1, wobei die Umgebungsdaten (ED) mindestens eines von einem Fahrzeugpositionssignal (VPS), einem Straßenneigungssignal (INC) und einem Straßenoberflächenindex (RS-Index) umfassen.

6. Verfahren nach einem der vorhergehenden Ansprüche, wobei die Verarbeitungsschritte durch das physikbasierte Verarbeitungsmodul (PPM) das Verwenden einer schnellen Fourier-Transformation, vorzugsweise gemäß der Peter-Welch-Methode, der erfassten gemessenen Sensordaten (MSD) oder der emulierten Fahrersignale (EDS) und der simulierten Fahrzeugzustandssignale (SVSS) sowie der Umgebungsdaten (ED) umfassen.

7. Verfahren nach einem der vorhergehenden Ansprüche, wobei das neuronale Netzwerkmodul ein rekurrentes neuronales Netzwerk ist.

8. Verfahren nach einem der vorhergehenden Ansprüche, wobei die Klassifizierung des Fahrstils eine von unvorsichtig, ruhig, vorsichtig und gefährlich ist.

9. Computerprogramm, das einen Satz von Anweisungen umfasst, die auf einem Computer oder einer Verarbeitungseinheit ausführbar sind, wobei der Satz von Anweisungen dazu konfiguriert ist, das Verfahren (100) nach einem der Ansprüche 1 bis 8 zu implementieren, wenn die Anweisungen von dem Computer oder der Verarbeitungseinheit ausgeführt werden.

10. Elektronische Steuereinheit (ECU), die dazu konfiguriert ist, mit einem Kommunikationsbus eines Fahrzeugs zu kommunizieren, um Datenzeitreihen zu erfassen, die während eines Zeitraums von im Fahrzeug installierten Sensoren (S) gemessen werden, wobei die elektronische Steuereinheit (ECU) dazu konfiguriert ist, ein Fahrzeugsimulationsmodul (VSM), ein neuronales Netzwerkmodul (NNM), vorzugsweise ein rekurrentes neuronales Netzwerk (RNN), ein Feedback-Modul (FM) und ein physikbasiertes Verarbeitungsmodul (PPM) auszuführen, wobei die elektronische Steuereinheit (ECU) ferner eine Verarbeitungseinheit und eine Speichereinheit umfasst, wobei die Speichereinheit ein Computerprogramm nach Anspruch 9 umfasst.

11. Fahrzeug, das eine elektronische Steuereinheit (ECU) nach Anspruch 10 umfasst.

## Revendications

1. Procédé (100) pour estimer et améliorer, sur la base d'un critère de niveau de sécurité, le style de conduite d'un conducteur (DRI) dans un véhicule, le véhicule comprenant une unité de commande électronique (ECU), des capteurs (S) et un bus de communication (CB) configuré pour acheminer des données mesurées par les capteurs (S) à l'unité de commande électronique (ECU), l'unité de commande électronique étant configurée pour faire fonctionner un module de simulation de véhicule (VSM), un module de réseau neuronal (NNM), un module de rétroaction (FM), et un module de traitement basé sur la physique (PPM), le procédé (100) comprenant les étapes suivantes mises en oeuvre par l'unité de commande électronique (ECU) :
- la collecte (101) de données de capteur mesurées (MSD) mesurées par les capteurs (S) pendant une période de temps, les données de capteur mesurées (MSD) comprenant des données d'environnement (ED), des signaux de conducteur (DS) et des signaux d'état de véhicule (VSS) ;
- le traitement (102) par le module de traitement basé sur la physique (PPM) des données de capteur mesurées (MSD), dans le domaine fréquentiel, pour produire, sur la base d'un modèle basé sur la physique, des données de capteur traitées (PSD), les données de capteur traitées (PSD) comprenant une classification d'itinéraire basée sur la physique (PRC) et une classification de style de conduite du conducteur basée sur la physique (PDSC) ;
- l'introduction (103) des données de capteur mesurées (MSD) en tant qu'entrée dans le module de réseau neuronal (NNM) entraîné pour prédire une sortie de réseau neuronal (NNO), la sortie de réseau neuronal (NNO) comprenant une classification d'itinéraire par apprentissage automatique (MLRC) et une classification de style de conduite du conducteur par apprentissage automatique (MLDSC) ;
- la fourniture (104) de la classification d'itinéraire basée sur la physique (PRC) et de la classification de style de conduite du conducteur basée sur la physique (PDSC), ainsi que de la classification d'itinéraire par apprentissage automatique (MLRC) et de la classification de style de conduite du conducteur par apprentissage automatique (MLDSC), en tant qu'entrée dans le module de rétroaction (FM) configuré pour estimer une recommandation de conduite (DR) pour le conducteur,
- l'entrée (105) de la recommandation de conduite (DR) dans un module d'émulation (EM), le module d'émulation (EM) étant configuré pour fournir des signaux de conducteur émulés (EDS) sur la base de la recommandation de conduite (DR),
- l'entrée (106) des signaux de conducteur émulés (EDS) et des données d'environnement (ED) dans le module de simulation de véhicule (VSM), le module de simulation de véhicule (VSM) étant configuré pour simuler le véhicule, sur la base des signaux de conducteur émulés (EDS) et des données d'environnement (ED), pour fournir des signaux d'état de véhicule simulés (SVSS),
- le traitement (108), par le module de traitement basé sur la physique (PPM), des signaux de conducteur émulés (EDS) et des signaux d'état de véhicule simulés (SVSS) ainsi que des données d'environnement (ED), dans le domaine fréquentiel, pour produire des données de capteur simulées traitées (PSSD), les données de capteur simulées traitées (PSSD) comprenant une classification d'itinéraire basée sur la physique simulée (SPRC) et une classification de style de conduite du conducteur basée sur la physique simulée (SPDSC) ;
- le traitement (109), par le module de réseau neuronal (NNM), des signaux de conducteur émulés (EDS) et des signaux d'état de véhicule simulés (SVSS) ainsi que des données d'environnement (ED) pour prédire une sortie de réseau neuronal simulée (SNNO), la sortie de réseau neuronal simulée (SNNO) comprenant une classification d'itinéraire par apprentissage automatique simulée (SMLRC) et une classification de style de conduite du conducteur par apprentissage automatique simulée (SMLDSC) ;
- la fourniture (110) au module de rétroaction (FM) de la classification d'itinéraire basée sur la physique simulée (SPRC) et de la classification de style de conduite du conducteur basée sur la physique simulée (SPDSC) ainsi que de la classification d'itinéraire par apprentissage automatique simulée (SMLRC) et de la classification de style de conduite du conducteur par apprentissage automatique simulée (SMLDSC), le module de rétroaction (FM) étant en outre configuré pour vérifier si la recommandation de conduite (DR) a amélioré le niveau de sécurité,
- en fonction du résultat de la vérification par le module de rétroaction (FM), la fourniture (111) de la recommandation de conduite au conducteur (DRI) pour améliorer le niveau de sécurité de style de conduite du conducteur.

2. Procédé selon la revendication 1, dans lequel les signaux de conducteur (DS) comprennent au moins un signal résultant d'une action du conducteur.

3. Procédé selon la revendication 2, dans lequel les signaux de conducteur (DS) comprennent au moins l'un parmi un signal de position de pédale de frein (BPS), un signal de position de pédale d'accélérateur (THS), un signal d'angle de braquage (SAS).

4. Procédé selon la revendication 1, dans lequel les signaux d'état de véhicule (VSS) comprennent au moins l'un parmi un signal de vitesse de roue (WSS), un signal d'accéléromètre de véhicule (VAS), un signal de vitesse de lacet et un signal de vitesse de roulis.

5. Procédé selon la revendication 1, dans lequel les données d'environnement (ED) comprennent au moins l'un parmi un signal de position de véhicule (VPS), un signal d'inclinaison de la route (INC), un indice de surface de la route (RS).

6. Procédé selon l'une quelconque des revendications précédentes, dans lequel les étapes de traitement par le module de traitement basé sur la physique (PPM) comprennent l'utilisation d'une transformation de Fourier rapide, de préférence selon la méthode de PWelch, des données de capteur mesurées (MSD) collectées, ou des signaux de conducteur émulés (EDS) et des signaux d'état de véhicule simulés (SVSS) ainsi que des données d'environnement (ED).

7. Procédé selon l'une quelconque des revendications précédentes, dans lequel le module de réseau neuronal est un réseau neuronal récurrent.

8. Procédé selon l'une quelconque des revendications précédentes, dans lequel la classification de style de conduite est l'une de ce qui suit : imprudente, en douceur, prudente et dangereuse.

9. Programme informatique comprenant un ensemble d'instructions exécutables sur un ordinateur ou une unité de traitement, l'ensemble d'instructions étant configuré pour mettre en oeuvre le procédé (100) selon l'une quelconque des revendications 1 à 8, lorsque les instructions sont exécutées par l'ordinateur ou l'unité de traitement.

10. Unité de commande électronique (ECU) configurée pour communiquer avec un bus de communication d'un véhicule de manière à collecter des séries chronologiques de données mesurées pendant une période de temps par des capteurs (S) installés sur le véhicule, l'unité de commande électronique (ECU) étant configurée pour faire fonctionner un module de simulation de véhicule (VSM), un module de réseau neuronal (NNM), de préférence un réseau neuronal récurrent (RNN), un module de rétroaction (FM) et un module de traitement basé sur la physique (PPM), l'unité de commande électronique (ECU) comprenant en outre une unité de traitement et une unité de mémoire, l'unité de mémoire comprenant un programme informatique selon la revendication 9.

11. Véhicule comprenant une unité de commande électronique (ECU) selon la revendication 10.
